# EUROPEAN PATENT APPLICATION

(11) **EP 1 491 394 A1**
(43) Date of publication of application: **29.12.2004**
(21) Application number: 04014064.2
(22) Date of filing: 16.06.2004
(51) Int. Cl.: B60N 2/48

(54) **A headrest apparatus for a vehicle seat**

(30) Priority: 27.06.2003 JP 2003185602
(71) Applicant: Aisin Seiki Kabushiki Kaisha, Kariya-shi, Aichi-ken 448-8650 (JP)
(72) Inventor: Terada, Takami, Intellectual Property Department, Kariya-shi Aichi-ken, 448-8650 (JP); Mori, Masatoshi, Intellectual Property Department, Kariya-shi Aichi-ken, 448-8650 (JP)
(74) Representative: Pautex Schneider, Nicole

(57) **Abstract**

A headrest (1) apparatus includes a support portion (4), a movable portion (5) supported for moving forward relative to the support portion (4) via a first arm (8a) and a second arm (8b), and a biasing member (12) provided between the support portion (4) and the movable portion (5) for biasing the movable portion (5) forward relative to the support portion (4). The first arm (8a) and the second arm (8b) are crossed and rotatably connected each other by a rotation axis (9).

## Description

### FIELD OF THE INVENTION

This invention generally relates to a headrest apparatus adapted to a vehicle seat.

### BACKGROUND OF THE INVENTION

A known headrest apparatus is described in U. S. patent publication No. 2003/057758. The known headrest apparatus includes a fixed support portion and a pre-stressed movable portion. The support portion and the movable portion are connected via upper and lower levers arranged in parallel with each other. The known headrest further includes a spring for applying the pre-stress to the movable portion.

According to the known headrest apparatus, when the vehicle crash or pre-crash notice is detected, pre-stress applied to the movable portion by the spring is released by a trigger apparatus to move the movable portion forward relative to the support portion. Thus, distance between a head of an occupant and the headrest becomes proper to reduce injuries given to the head or lower part of neck of the occupant.

Notwithstanding, with the construction of the known U. S. patent publication No. 2003/057758, in order to transmit restoring force of the spring to the upper and lower levers when pre-stress applied to the movable portion is released, the known headrest apparatus further includes a spring lever for transmitting the restoring force of the spring to the lower lever and a connecting lever for transmitting the restoring force of the spring transmitted from the lower lever to the upper lever, which includes complex construction.

A need thus exists for a headrest with more simple mechanism.

### SUMMARY OF THE INVENTION

According to an aspect of the present invention, a headrest apparatus includes a support portion mounted on the vehicle seat, a movable portion supported for moving forward relative to the support portion via a first arm and a second arm, and a biasing means provided between the support portion and the movable portion for biasing the movable portion forward relative to the support portion. The first arm and the second arm are crossed and rotatably connected each other by a rotation axis.

According to the present invention, a linkage which is constructed by the first and second arm between the support portion and the movable portion is structured simply. The operation of the linkage to extend the movable portion forward is structured simple.

### BRIEF DESCRIPTION OF THE DRAWINGS

The foregoing and additional features and characteristics of the present invention will become more apparent from the following detailed description considered with reference to the accompanying drawings, wherein:
Fig. 1 shows a front view of a headrest according to an embodiment of the present invention.
Fig. 2 shows a cross-sectional view taken on line II-II of Fig. 1.
Fig. 3 shows a perspective view of an internal mechanism of the headrest according to the embodiment of the present invention.
Fig. 4 shows a cross-sectional view showing an arrangement of a coil spring at a non-extended position (original position) of the headrest according to the embodiment of the present invention.
Fig. 5 shows a cross-sectional view showing an arrangement of the coil spring at an extended position of the headrest according to the embodiment of the present invention.
Fig. 6 shows a cross-sectional view taken on line VI-VI of Fig.1 at the non-extended position of the headrest according to the embodiment of the present invention.
Fig. 7 shows a cross-sectional view taken on line VII-VII of Fig. 1 at the extended position of the headrest according to the embodiment of the present invention.
Fig. 8 shows a cross-sectional view taken on line VIII-VIII of Fig. 1 in the non-extended position of the headrest according to the embodiment of the present invention.
Fig. 9 shows a cross-sectional view showing an operation of a stopper member according to the embodiment of the present invention.
Fig. 10 shows a cross-sectional view taken on line X-X of Fig. 1 in the extended position of the headrest according to the embodiment of the present invention.

### DETAILED DESCRIPTION

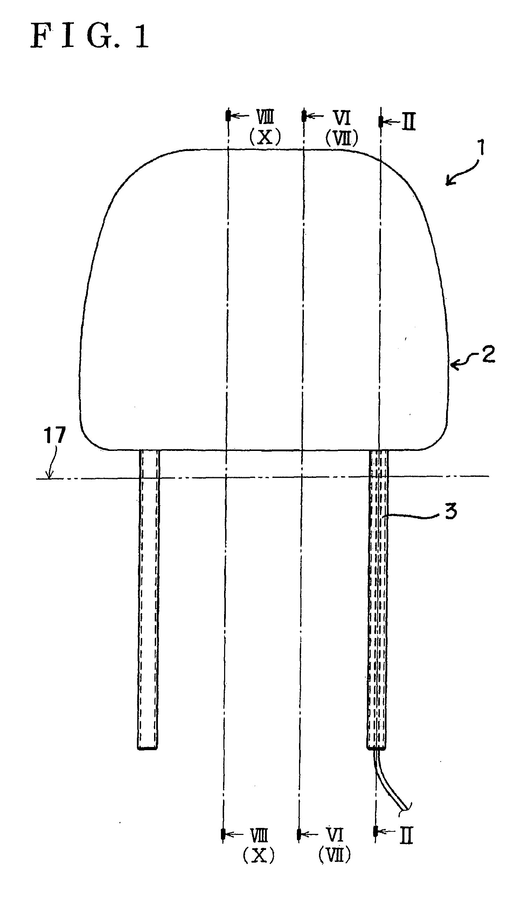

One embodiment of the present invention will be explained with reference to the illustrations of the drawing figures as follows. As shown in Fig. 1, a headrest 1 includes a headrest body 2 and a pair of headrest stays 3. The headrest stays 3 support the headrest body 2 relative to a seat back of the vehicle seat 17. First ends of the headrest stays 3 are connected to the headrest body 2 so that the headrest stays 3 support the headrest body 2. Second ends of the headrest stays 3 are accommodated in the seat back of the vehicle seat 17 to support the headrest body 2. The height of the headrest body 2 is adjustable by a known constitution arranged between the seat back of the vehicle seat 17 and the headrest stays 3.

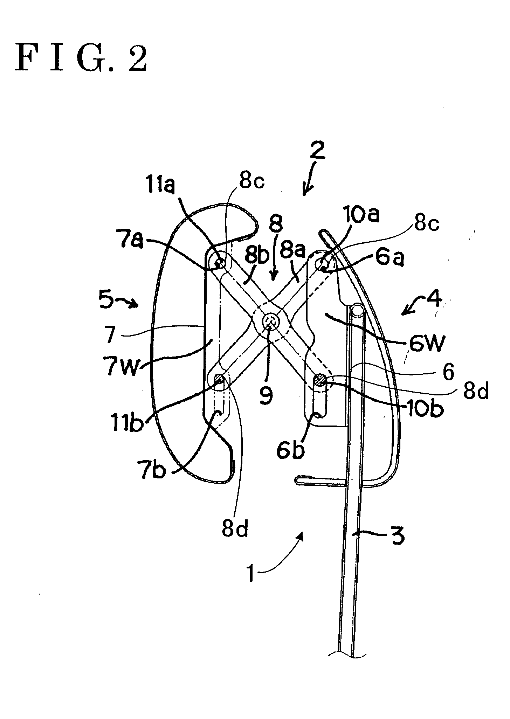

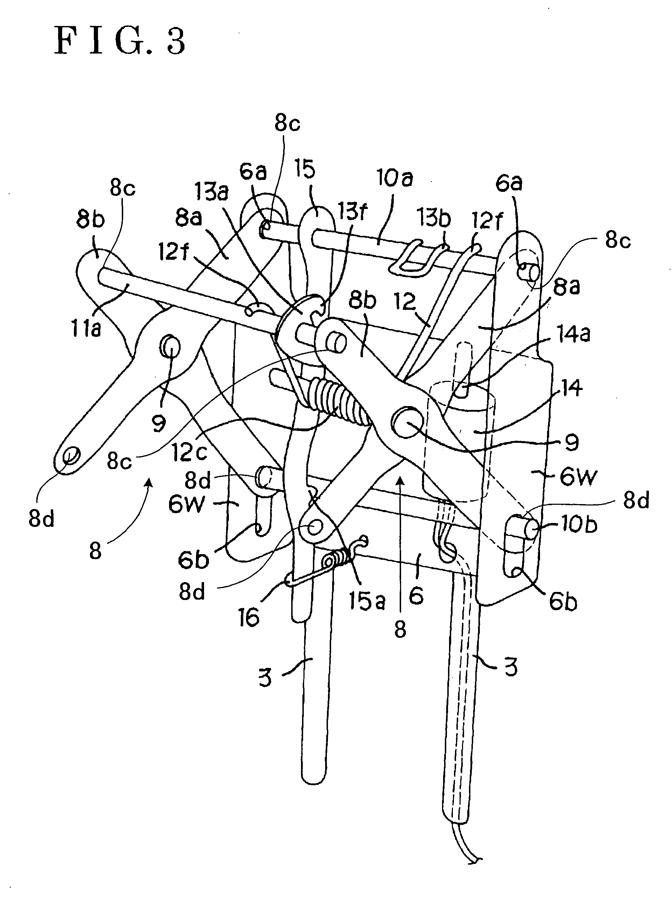

As shown in Fig. 2, the headrest body 2 includes a support portion 4 and a movable portion 5. The support portion 4 includes a first bracket 6. The first bracket 6 is made from a metal plate, or the like. The bracket 6 is fixed, for example, via welding at the headrest stays 3 whose a first end of each support stay 3 is projected from the support portion 4, and a second end of each support stay 3 is positioned in the support portion 4. The first bracket 6 may be fixed at the headrest stays 3 via a bolt, a screw cramp, a rivet caulking or the like. As shown in Fig. 3, the first bracket 6 is configured to have two lateral surfaces 6W formed, for example, by bending two opposite sides of the metal plate, or the like. The first bracket 6 includes approximate U-shape in cross-section. The lateral surfaces have attachment holes 6a and 6b respectively. The attachment holes 6b are vertically elongated along the vertical orientation of the first bracket 6, that is, the vertical orientation of the headrest body 2. In the meantime, as shown in Fig. 2, the movable portion 5 includes a second bracket 7. The second bracket 7 is configured to have lateral surfaces 7W, for example, by bending a metal plate, or the like, likewise the first bracket 6. The second bracket 7 is provided at the movable portion 5 and opposing to the first bracket 6. Each lateral surface 7W includes attachment holes 7a, 7b. The attachment holes 7b are vertically elongated along with vertical orientation of the headrest body 2, likewise the attachment hole 6b.

As shown in Figs. 2 and 3, the first bracket 6 and the second bracket 7 are connected each other via X links 8 including arms 8a, 8b and a corresponding pin 9 (a rotation axis). The arm 8a and the arm 8b are crossed each other to be rotatably connected via the pin 9 serving as a connecting portion.

As shown in Fig. 3, the X links 8 are connected to the first bracket 6 via rods 10a, 10b. The X links 8 are provided at both ends of the rods 10a and 10b, in other words, at the both lateral surfaces of the first bracket 6. Each X link 8 is connected each other via the rods 10a and 10b. The rod 10a is positioned through an attachment holes 8c provided at the end portion of the arms 8a and its corresponding attachment holes 6a provided at the first bracket 6. The rod 10b is positioned through an attachment holes 8d provided at the end portion of the arms 8b and their corresponding vertically elongated attachment holes 6b provided at the first bracket 6. Thus, the X links 8 and the first bracket 6 are connected. Further, as shown in Fig. 2, likewise the first bracket 6, a rod 11a is positioned through the attachment holes 8c provided at the end portion of the arms 8b and the corresponding attachment holes 7a, and a rod 11b is positioned through the attachment holes 8d provided at the end portion of the arms 8a and the corresponding vertically elongated attachment holes 7b provided at the second bracket 7, thus to connect the X links 8 and the second bracket 7. In other words, the X links 8 are slidably connected to the first bracket 6 and the second bracket 7 via the rod 11b in the vertically elongated attachment holes 6b, 7b.

As shown in Figs. 3-5, a coil spring 12 serving as biasing means for opening the X-links 8 is provided at the headrest 1. A leaf spring, a spiral spring, a cylinder apparatus using hydraulic pressure or air pressure may serve as the biasing means for opening the X links 8. The coil spring 12 includes a coil portion 12c and hook portions 12f extended from the both end of the coil. At least one end of one of the pins 9 is elongated to be positioned through the coil portion 12c and thus to support the coil portion 12c. Further, each hook portion 12f is provided to hook the rods 10a and 11a respectively against the biasing force of the coil portion 12c. Accordingly, the coil spring 12 biases the X links 8 for expanding orientation.

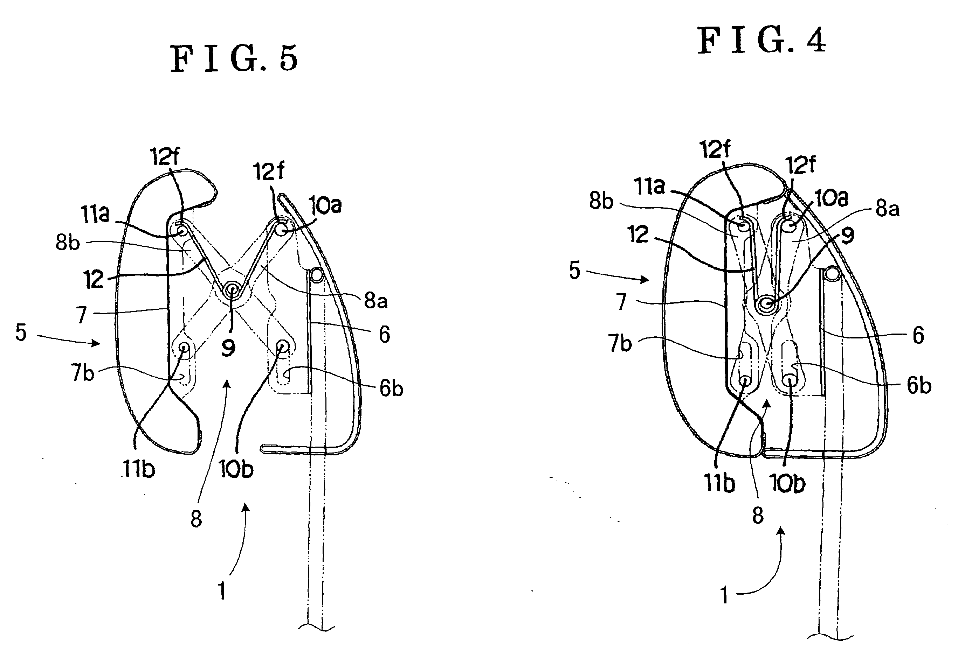

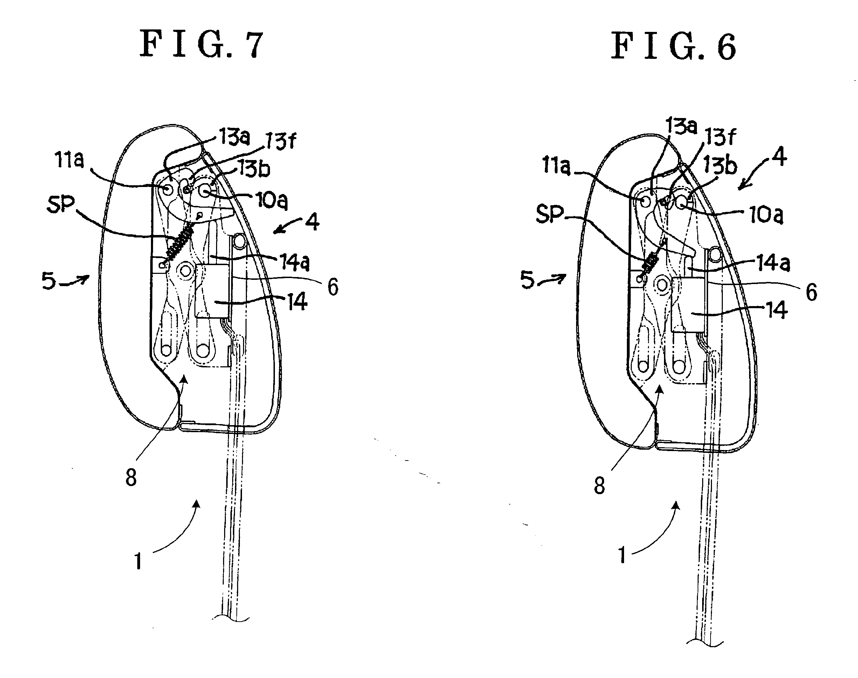

When the headrest 1 is at a non-extended position (original position) without any notice of the pre-crash tendency or shock from the crash, as shown in Figs. 4 and 6, the X links 8 and the rods 10a, 10b, 11a, 11b connected to the X links 8 are closed while provided with the biasing force from the coil spring 12, and the state of the X links 8 at the non-extended position is maintained by lock members 13a, 13b between the rods 10a, 11a so that the movable portion 5 does not extend forward. The lock member 13a is rotatably positioned about the rod 11a and includes a hook portion 13f at a first end of the lock member 13a. The lock member 13b is positioned about the rod 10a and selectively engaged with the hook portion 13f. In case that the hook portion 13f engages with the lock member 13b, the headrest 1 is maintained at the non-extended position. A spring SP (shown in Fig. 6) is provided between the lock member 13a and the movable portion 5. The spring SP biases the lock member 13a to engage with the lock member 13b.

As shown in Fig. 6, in order to extend the movable portion 5 forward from the non-extended position, a holding by the lock members 13a, 13b at the non-extended position of the headrest 1 is released. The lock is released by a releasing apparatus 14 attached at the first bracket 6. As the releasing apparatus 14, for example, a solenoid apparatus is used. The solenoid apparatus is connected to the sensor for detecting the shock, and operates with the input of electric signal from the sensor. A mechanical sensor including the function of the sensor for detecting the shock may be included for the releasing apparatus 14.

The operation of the headrest 1 from the non-extended position to the extended position will be explained as follows.

The pre-crash tendency or shock from the crash are detected by the sensor, or the like, and transmitted to the releasing apparatus 14 shown in Fig. 6 as an electric signal. Receiving an electric input by the releasing apparatus 14, a plunger 14a of the solenoid apparatus serving as the releasing apparatus 14 moves upward relative to the releasing apparatus 14. As shown in Fig. 6 and Fig. 7, a second end of the lock member 13a always contacts the plunger 14a at the non-extended position of the headrest 1. The lock member 13a rotates counterclockwise about the rod 11a serving as the attachment portion, when the plunger 14a moves upward by the operation of the releasing apparatus 14. Thus, as shown in Fig. 7, the lock between the lock member 13a and 13b is released.

With the release of the lock, as shown in Fig. 4 and Fig. 5, the biasing force from the coil spring 12 is applied to the rods 10a, 11a. Simultaneously, the arms 8a, 8b of the X links 8 connected to the rods 10a, 11a rotates about the corresponding pin 9 to extend in the fore-aft direction. Accordingly, the rods 10b, 11b slide upward along the attachment holes 6b, 7b respectively provided at the first bracket 6 and the second bracket 7. When the rods 10b, 11b reach the upper end of the attachment holes 6b and 7b, the extension of the X links 8, in other words, the forward extension of the movable portion 5 is completed.

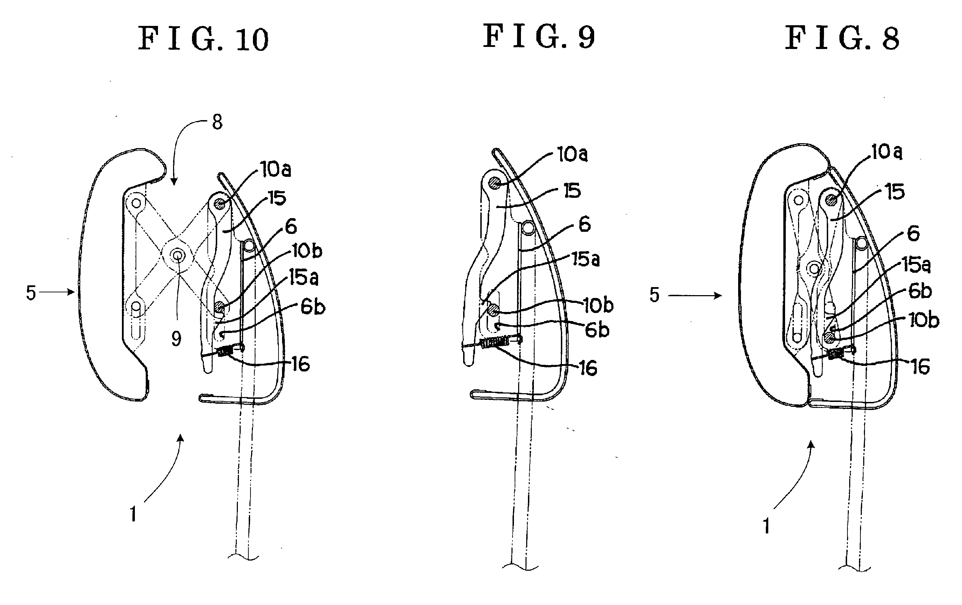

The movable portion 5 extends forward to support the head of the occupants at the sudden backward swing by an inertial force due to the crash. A stopper member 15 is included at the headrest 1, as shown in Figs. 8, 9 and 10 to maintain the forward extended state of the headrest 1 even in the case that the force for returning to the non-extended position is applied to the movable portion 5. The stopper member 15 is vertically elongated and rotatably positioned about the rod 10a. The stopper member 15 includes a claw-like hook portion 15a. The lower end of the stopper member 15 and the first bracket 6 are connected via a spring 16. By biasing force of the spring 16, the stopper member 15 is always biased in the direction counterclockwise to rotate about the rod 10a serving as the attachment portion. The operation of the stopper member 15 will be explained as follows.

In case the holding between the lock members 13a and 13b as shown in Fig. 6 is released at the non-extended position of the headrest 1 shown in Fig. 8, the rod 10b positioned through the attachment hole 6b provided at the first bracket 6 slides upward along the attachment hole 6b along with the extension of the movable portion 5 as shown in Fig. 8 and Fig. 9. In this action, the rod 10b slides upward while pushing the hook portion 15a formed at the stopper member 15 relatively (in this case the stopper member 15 rotates clockwise) against the restoring force of the spring 16. When the rod 10b exceeds the formed zone of the hook portion 15a, the stopper member 15 is pulled by the counterclockwise restoring force of the spring 16 about the rod 10a serving as the attachment portion. Then as shown in Fig. 10, the movement of the rod 10b is restrained by the operation of the hook portion 15a formed at the stopper member 15. Under this condition, the rod 10b is structurally locked even if the force likely to return the movable portion 5 to the non-extended position is applied. Thus, because the X links 8 do not close under this state, the movable portion 5 does not return to the non-extended position. Accordingly, extended forward state of the movable portion 5 is maintained, to securely support the head of the occupants. By providing plural claw-like hook portions or a stepped claw-like hook portion, plural extended positions of the movable portion may be available.

A procedure for the recovery of the movable portion 5 from the extended position as shown in Fig. 10 to non-extended position is explained as follows.

As shown in Fig. 10, under the condition that the movable portion 5 is positioned at the extended forward position, as the foregoing explanation, the movement of the rod 10b is restrained in the attachment hole 6b by the stopper member 15. The stopper member 15 is connected to the first bracket 6 via the spring 16. In such condition, by pulling, for example, the lower end of the stopper member 15 in the clockwise direction against the biasing force of the spring 16, the restraint of the movement of the rod 10b is released. In this case, the restraint of a rotation of the arms 8a, 8b about the corresponding pin 9 is released simultaneous with the release of the restraint of the movement of the rod 10b. Thus, the biasing force of the coil spring 12 affects to extend the X links 8 as shown in Fig. 5. Accordingly, by applying the force exceeding the biasing force, the movable portion 5 extended forward recovers to the non-extended position.

Further, because the plunger 14a cooperating the operation of the releasing apparatus 14 at the non-extended position of the headrest 1 contacts to the releasing apparatus 14 as shown in Fig. 6, the sensitivity for actuating the headrest 1 to the extended position cooperating with the operation of the releasing apparatus 14 is increased effectively.

The principles, a preferred embodiment and mode of operation of the present invention have been described in the foregoing specification. However, the invention which is intended to be protected is not to be construed as limited to the particular embodiment disclosed. Further, the embodiment described herein is to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. A headrest apparatus for a vehicle seat comprising:
a support portion(1) being adapted to be mounted on the vehicle seat;
a movable portion (5) for moving forward relative to the support portion via a first arm (8a) and a second arm (8b);
a biasing means (12) provided between the support portion and the movable portion for biasing the movable portion forward relative to the support portion
**characterized in that**
the first arm and the second arm are crossed and rotatably connected each other by a rotation axis (9).

2. The headrest apparatus according to Claim 1, wherein
the first arm and the second arm rotate to open in an fore-aft direction by biasing force of the biasing means to move the movable portion from an original position to an extended position; and wherein
the first arm and the second arm rotate to close in the fore-aft direction to move the movable portion from the extended position to the original position.

3. The headrest apparatus according to Claim 2, wherein
a first end of the first arm is rotatably connected to the support portion and a second end of the first arm is rotatably and slidably connected to the movable portion; and wherein
a first end of the second arm is rotatably connected to the movable portion and a second end of the second arm is rotatably and slidably connected to the support portion.

4. The headrest apparatus according to Claim 3, further comprising:
a stopper member (15) for restraining a sliding movement of the second end of the first arm relative to the movable portion and a sliding movement of the second end of the second arm relative to the support portion to maintain the movable portion at the extended position.

5. The headrest apparatus according to Claim 3, further comprising:
a lock member (13a, 13b, 13f) couples either one of the first and second ends of the first arm and either one of the first and second ends of the second arm for stopping the first and the second arms to prevent relative movement thereof in the fore-aft direction to maintain the movable portion at the original position.

6. The headrest apparatus according to Claim 1, wherein
the biasing means includes a coil spring coiled about the rotation axis of the first arm and the second arm; and wherein
the coil spring couples one end of the first arm and one end of the second arm.
